# FASCICULE DE BREVET EUROPEEN

(11) **EP 3 329 561 B1**
(45) Date de publication et mention de la délivrance du brevet: **20.03.2019**
(21) Numéro de dépôt: 16750973.6
(22) Date de dépôt: 18.07.2016
(51) Int. Cl.: H01R 24/76, H02G 3/18

(54) **ENSEMBLE D'APPAREILLAGES ÉLECTRIQUES**
ANORDNUNG VON ELEKTRIKTEILEN
ASSEMBLY OF ELECTRIC DEVICES

(30) Priorité: 28.07.2015 FR 1557173
(43) Date de publication de la demande: 06.06.2018
(73) Titulaire: Legrand France, 87000 Limoges (FR); Legrand SNC, 87000 Limoges (FR)
(72) Inventeur: MAZIERE, Laurent, 87220 Feytiat (FR); CAILLE, Jean-Loup, 87520 Veyrac (FR); LONGEVILLE, Jérome, 87350 Panazol (FR); CHAUMENY, Jean-Luc, 87590 Saint Just Le Martel (FR)
(74) Mandataire: Jacobacci Coralis Harle
(86) Numéro de dépôt international: PCT/FR2016/051840
(87) Numéro de publication internationale: WO 2017/017338

(56) Documents cités:
- DE-A1- 10 121 231
- DE-A1-102012 107 623
- FR-A1- 2 863 414
- US-A1- 2014 370 746

## Description

### DOMAINE TECHNIQUE AUQUEL SE RAPPORTE L'INVENTION

La présente invention concerne de manière générale le domaine des appareillages électriques à encastrer dans des cavités pratiquées dans des parois.

L'invention porte plus particulièrement sur un ensemble d'appareillages électriques à rapporter dans une paroi murale, comportant :
- deux modules distincts qui comprennent chacun un socle logeant des bornes électriques, l'un des socles étant équipé de moyens de fixation dans une boîte électrique, l'autre des socles étant équipé de moyens de fixation dans une cavité pratiquée dans la paroi, et
- une barrette de connexion qui comprend un socle logeant des conducteurs électriques adaptés à connecter les bornes électriques de l'un des modules avec les bornes électriques de l'autre module.

L'invention trouve une application particulièrement avantageuse dans la réalisation d'un ensemble d'appareillages dans lequel les modules présentent par exemple des fonctions d'interrupteur, de va-et-vient, de variateur électrique, de prise de courant, de prise USB, de voyant, de thermostat, ou encore de détecteur (de fumée, d'inondation, de température, de mouvement ou de lumière).

### ARRIERE-PLAN TECHNOLOGIQUE

Généralement, pour installer deux modules d'appareillages électriques en position juxtaposée dans une cloison creuse, on pratique une ouverture oblongue dans la cloison, on y rapporte une boîte multipostes, puis on engage successivement dans cette boîte les deux modules d'appareillages électriques.

Pour percer l'ouverture oblongue dans la cloison creuse, on réalise généralement deux ouvertures circulaires à la scie cloche, puis on utilise une scie à guichet pour dégager l'espace situé entre les deux ouvertures circulaires de manière à obtenir l'ouverture oblongue.

La fixation de la boîte dans l'ouverture oblongue se fait ensuite par vis. On utilise également des vis pour bloquer chaque module d'appareillage dans la boîte.

On comprend donc que cette installation est longue et fastidieuse à mettre en oeuvre.

Dans le cas où un module d'appareillage est déjà installé dans la cloison, au moyen d'une boîte électrique ronde, l'installation d'un second module d'appareillage à côté de ce premier module s'avère encore plus difficile.

Dans ce cas, il est en effet nécessaire de retirer le premier module d'appareillage, de le dé-câbler, de retirer la boîte électrique hors de la cloison, d'élargir l'ouverture pratiquée dans la cloison, d'installer une nouvelle boîte oblongue, de re-câbler les deux modules puis de les installer dans la nouvelle boîte.

Le document DE10121231 divulgue quant à lui une solution pour installer des modules d'appareillages électriques en position juxtaposée sur une paroi pleine.

Dans ce document, un premier des modules d'appareillage s'installe classiquement dans la paroi, c'est-à-dire dans une boîte électrique encastrée dans une cavité pratiquée dans la paroi. Les second et troisième modules d'appareillage sont quant à eux directement fixés sur la paroi, par vissage. Des barrettes de connexion équipées de broches sont alors utilisées pour brancher les modules d'appareillage en parallèle les uns des autres.

Un premier inconvénient de cette solution est que l'opération de vissage des second et troisième modules d'appareillage s'avère difficile à mettre en oeuvre lorsqu'il s'agit d'assurer un parfait centrage des modules les uns par rapport aux autres, selon un axe parfaitement horizontal.

Un autre inconvénient est que, puisqu'ils ne sont pas engagés dans la paroi, les second et troisième modules forment nécessairement de fortes surépaisseurs par rapport à la paroi, ce qui s'avère inesthétique. En outre, cette surépaisseur est d'autant plus importante que les modules doivent pouvoir accueillir les broches des barrettes de connexion qui sont orientées vers l'avant (ils doivent donc présenter une épaisseur supérieure à la longueur des broches).

Un troisième inconvénient est que, dans le cas où l'on souhaite ajouter un module d'appareillage à des modules déjà installés sur la paroi, il est nécessaire de retirer l'un de ces modules de manière à pouvoir y connecter une nouvelle barrette de connexion.

Un quatrième inconvénient est que cette solution ne peut pas être employée sur des cloisons creuses.

La fabrication d'un tel ensemble de modules et de barrette de connexion s'avère par ailleurs onéreuse, du fait du grand nombre d'éléments composant cet ensemble.

Enfin, on constate des échauffements et des pertes électriques au niveau de la zone de connexion de chaque broche de la barrette de connexion dans le module correspondant.

Le document US 2014/0370746 divulgue une autre solution pour installer des modules d'appareillages électriques en position juxtaposée sur une paroi pleine.

### OBJET DE L'INVENTION

La présente invention propose alors de simplifier et fiabiliser l'installation de deux modules en position juxtaposée.

Plus particulièrement, on propose selon l'invention un ensemble tel que défini dans l'introduction, dans lequel une partie au moins du socle de la barrette de connexion vient de formation avec une partie au moins du socle de l'un et/ou de l'autre des deux modules.

Ainsi, grâce à l'invention, une partie au moins de la barrette de connexion et une partie au moins d'un module forment un ensemble monobloc à rapporter dans la paroi murale.

Le nombre d'éléments composant l'ensemble étant réduit, sa fabrication et son installation s'en trouvent simplifiées.

Par ailleurs, puisqu'une partie de la barrette de connexion est prévue pour former une pièce monobloc avec une partie de l'un des modules, les conducteurs électriques logés dans le socle de la barrette de connexion peuvent être connectés aux bornes de ce module en usine, par exemple par des soudures ou des sertissages, ce qui réduit les risques d'échauffement et de pertes électriques.

Préférentiellement, le socle du second module présente un épaulement prévu pour s'appuyer contre la face avant de la paroi murale, et la barrette de connexion s'étend à l'avant du plan de la face arrière plane de cet épaulement.

La solution selon l'invention ne nécessite donc pas de dégager une ouverture oblongue dans la paroi murale. Le perçage à la scie cloche de deux ouvertures circulaires (ou d'une ouverture circulaire supplémentaire dans le cas de l'ajout d'un nouveau module à côté d'un module déjà existant) suffit puisque la barrette de connexion s'étendra par-dessus la paroi, entre ces deux ouvertures circulaires.

Une boîte engagée dans l'une des ouvertures circulaires permet alors d'accueillir le premier module tandis que le second module est directement engagé au travers de l'autre des ouvertures circulaires. De ce fait, l'ensemble ne fait que peu saillie à l'avant de la paroi murale.

Enfin, en pratiquant une ouverture de diamètre supérieur à celui du second module et en réglant la position angulaire du premier module dans la boîte électrique, il devient possible d'ajuster l'horizontalité de l'ensemble.

D'autres caractéristiques avantageuses et non limitatives de l'ensemble conforme à l'invention sont les suivantes :
- une partie au moins du socle de la barrette de connexion vient de formation avec une partie au moins du socle de l'autre des deux modules ;
- le socle de la barrette de connexion vient entièrement de formation avec une partie du socle de l'un et/ou l'autre des deux modules ;
- le socle de chaque module comporte une partie avant et une partie arrière à assembler l'une avec l'autre, et le socle de la barrette de connexion comporte une partie avant et une partie arrière qui viennent respectivement de formation avec les parties avant des socles des deux modules et avec les parties arrière des socles des deux modules ;
- le socle de chaque module comporte une partie avant et une partie arrière équipées de moyens d'encliquetage complémentaires ;
- les conducteurs électriques sont chacun formés d'une seule pièce et présentent chacun une extrémité soudée ou sertie sur les bornes électriques correspondantes de l'un des deux modules ;
- les conducteurs électriques présentent chacun deux extrémités respectivement soudées ou serties sur les bornes électriques correspondantes de l'un et de l'autre des deux modules ;
- le socle d'un second des modules comporte une paroi latérale et un épaulement qui fait saillie à l'extérieur de la paroi latérale et qui présente une face arrière plane pour s'appuyer contre la face avant de la paroi ;
- les moyens de fixation du socle du second module comportent des moyens d'accrochage rétractables mobiles entre une position rétractée vers l'intérieur par rapport à la paroi latérale du socle et une position déployée vers l'extérieur par rapport à la paroi latérale du socle ;
- les moyens de fixation du socle d'un premier des modules comportent des moyens de réglage de la position angulaire du premier socle dans la boîte électrique ;
- il est prévu une plaque d'habillage adaptée à recouvrir simultanément une partie frontale des socles des deux modules et le socle de la barrette de connexion ;
- la plaque d'habillage comporte des moyens d'encliquetage adaptés à s'accrocher aux socles de chacun des deux modules ;
- l'un au moins des deux modules présente une fonction de prise de courant ; et
- le socle de la barrette de connexion comprend intérieurement au moins une nervure de rigidification et d'isolement électrique, qui s'étend en longueur depuis l'un jusqu'à l'autre des socles des deux modules.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un ensemble d'appareillages électriques conforme à l'invention ;
- la figure 2 est une vue en perspective arrière des deux modules de l'ensemble de la figure 1 ;
- la figure 3 est une vue schématique en perspective éclatée des deux modules de l'ensemble de la figure 1 ;
- la figure 4 est une vue de face des deux modules de l'ensemble de la figure 1 ;
- la figure 5 est une vue schématique en coupe, selon la plan A-A de la figue 4, sur laquelle les moyens de fixation d'un second des modules sont représentés en position déverrouillée ;
- la figure 6 est une vue homologue de celle de la figue 5, sur laquelle les moyens de fixation du second des modules sont représentés en cours de verrouillage ;
- la figure 7 est vue schématique en perspective de dessous d'une partie avant de l'ensemble de la figure 1 ;
- la figure 8 est vue schématique en perspective de dessus d'une partie arrière de l'ensemble de la figure 1 ;
- les figures 9 et 10 sont respectivement des vues de détail des zones IX et X des figures 5 et 6.

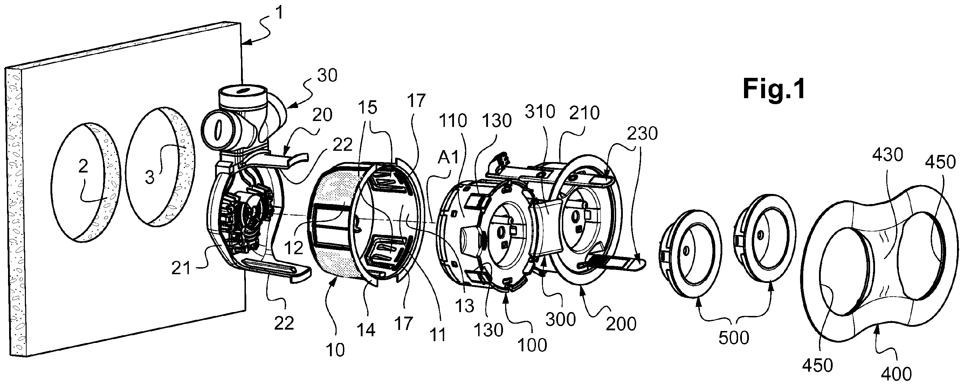

Sur les figures 1 à 6, on a représenté un mode de réalisation d'un ensemble d'appareillages électriques à rapporter sur une paroi murale.

Sur les figures, cette paroi murale est formée par une cloison creuse.

On rappelle à ce sujet que, de manière connue, une telle cloison creuse est généralement composée d'une ossature métallique (formée de montants verticaux et de rails horizontaux non représentés) et de panneaux de plâtre rapportés sur l'une au moins des deux faces de l'ossature métallique.

En variante, il pourrait s'agir d'une cloison creuse maçonnée (formée par exemple de briques creuses), ou d'une cloison pleine.

Dans la description, les termes « avant » et « arrière » seront utilisés par rapport à la direction du regard de l'installateur de l'ensemble d'appareillages électriques dans le panneau de plâtre. Ainsi, les termes avant et arrière désigneront respectivement le lieu tourné vers l'extérieur de la cloison creuse et le lieu tourné vers l'intérieur de cette cloison creuse.

L'ensemble d'appareillages électriques représenté sur la figure 1 comporte deux modules 100, 200 à encastrer dans la cloison creuse 1 en position juxtaposée, l'un à côté de l'autre, de manière simple et sans outil (seule une scie cloche est nécessaire pour pratiquer au préalable deux ouvertures circulaires 2, 3 dans le panneau de plâtre).

Chacun de ces deux modules 100, 200 comporte un socle 110, 210 en matière isolante, qui loge intérieurement des bornes électriques et qui porte à l'avant un enjoliveur 500. Les formes des bornes et des enjoliveurs 500 dépendent des fonctions électriques des modules 100, 200 (prise de courant, interrupteur, prise USB, ...).

Comme le montre la figure 1, pour permettre un montage simple des modules 100, 200 dans la cloison creuse, le socle 110 du premier module 100 est équipé de moyens de fixation 130 adaptés à s'accrocher dans une boîte électrique 10, tandis que le socle 210 du second module est équipé de moyens de fixation 230 adaptés à s'accrocher directement à la cloison creuse 1.

Dans le mode de réalisation représenté sur les figures, on utilisera une boîte électrique 10 particulière, qui sera décrite en détail dans la suite de cet exposé et qui présente l'avantage de pouvoir être installée dans la cloison creuse sans outil et de pourvoir recevoir le premier module 100 sans outil. En variante, un autre type de boîte pourrait être utilisé.

Le réseau électrique local permet d'amener directement le courant électrique aux bornes électriques du premier module 100 (celui logé dans la boîte électrique 10). Les bornes électriques du second module 200 ne sont en revanche pas directement alimentées en courant électrique par le réseau électrique local, mais indirectement via les bornes électriques du premier module 100. On dit alors du second module 200 qu'il est « branché en parallèle » du premier module 100.

Une barrette de connexion 300 est alors prévue pour réaliser ce branchement.

Cette barrette de connexion 300 comprend à cet effet un socle 310 qui loge des conducteurs électriques.

Selon une caractéristique particulièrement avantageuse de l'invention, une partie au moins du socle 310 de la barrette de connexion 300 vient de formation avec une partie au moins du socle 110, 210 de l'un et/ou de l'autre des deux modules 100, 200.

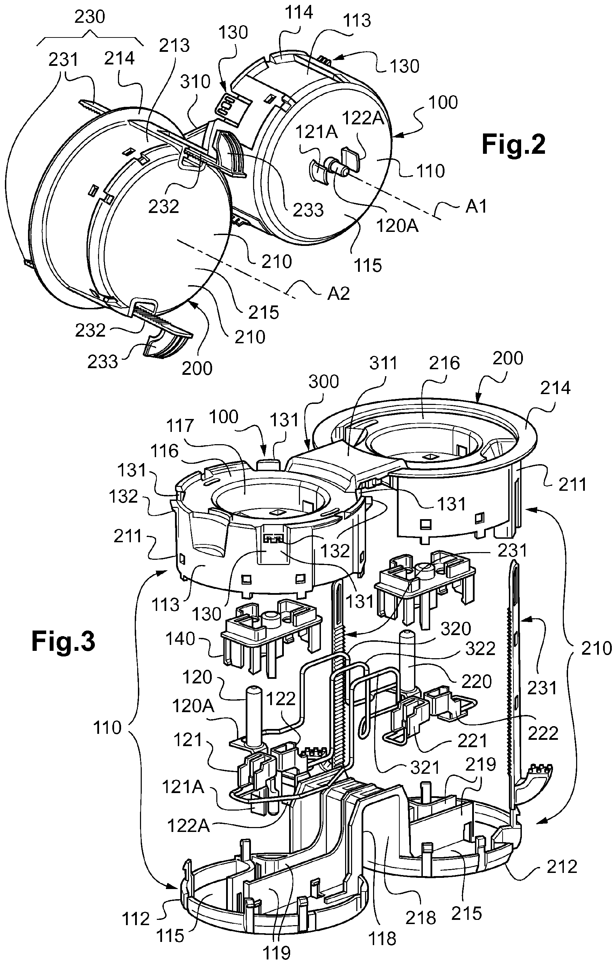

De manière préférentielle, comme cela apparaît bien sur la figure 3, le socle 110, 210 de chaque module 100, 200 comporte une partie avant 111, 211 et une partie arrière 112, 212 à assembler l'une avec l'autre, et le socle 310 de la barrette de connexion 300 comporte une partie avant 311 et une partie arrière 312 qui viennent respectivement de formation avec les parties avant 111, 211 des socles des deux modules 100, 200 et avec les parties arrière 112, 212 des socles des deux modules 100, 200.

En d'autres termes, les parties arrière 112, 212, 312 des socles des deux modules 100, 200 et de la barrette de connexion 300 forment un ensemble monobloc. Elles viennent ici de formation par moulage d'une seule pièce en matière plastique isolante, par exemple en polycarbonate.

De la même manière, les parties avant 111, 211, 311 des socles des deux modules 100, 200 et de la barrette de connexion 300 forment un ensemble monobloc. Elles viennent ici de formation par moulage d'une seule pièce en matière plastique isolante, par exemple en polycarbonate.

Ces deux ensembles monoblocs sont conçus pour être assemblés par encliquetage, de manière indémontable.

Comme le montre la figure 2, dans le mode de réalisation représenté sur les figures, le socle 110, 210 de chaque module 100, 200 comporte une paroi latérale 113, 213 centrée autour d'un axe central A1, A2, qui est fermée à l'arrière par une paroi de fond 115, 215 et qui est fermée à l'avant par une paroi frontale 116, 216 (voir figure 3).

Dans ce mode de réalisation, la paroi latérale 113, 213 de chaque module 100, 200 est cylindrique de révolution autour de l'axe central A1, A2.

La paroi de fond 115, 215 est plane et présente un contour circulaire autour de l'axe central A1, A2.

Comme le montre la figure 3, la paroi frontale 116, 216 est plane et présente une forme annulaire autour de cet axe central A1, A2. De cette manière, la paroi frontale 116, 216 du socle de chaque module 100, 200 délimite en son centre une ouverture à partir du bord de laquelle s'étend un renfoncement 117, 217 prévu pour accueillir l'un des enjoliveurs 500 et pour l'y retenir, par encliquetage.

Comme cela a été décrit supra, chaque socle 110, 210 est formé de deux parties avant et arrière.

Ici, la jonction entre les parties avant 111, 211 et arrière 112, 212 des socles 110, 210 des modules 100, 200 se fait au niveau de la paroi latérale 113, 213 de chaque socle 110, 210.

Comme le montre la figure 3, chaque paroi latérale 113, 213 est plus précisément ici découpée en deux parties selon un plan qui est orthogonal à l'axe central A1, A2 et qui s'étend à proximité de la paroi de fond 115, 215. On observe toutefois, que la découpe de chaque paroi latérale 113, 213 selon ce plan est interrompue d'un côté adjacent de chaque socle 110, 210, si bien que la ligne de découpe remonte jusqu'à l'avant de la paroi latérale 113, 213. De cette manière, la partie arrière 112, 212 de chaque socle 110, 210 porte un pan 118, 218 de la paroi latérale 113, 213, de contour rectangulaire.

Les parties avant 111, 211 et arrière 112, 212 des socles 110, 210 des deux modules sont encliquetées l'une sur l'autre, au moyen de pattes d'encliquetage qui s'élèvent à partir des parties arrière 112, 212 des socles 110, 210 et qui portent des dents adaptées à s'accrocher dans des ouvertures prévues dans les parties avant 111, 211.

Ici, ces pattes d'encliquetage sont réparties le long du bord de la partie arrière 112, 212 de chaque socle, et leurs dents sont agencées de telle manière que le démontage des parties avant 111, 211 et arrière 112, 212 des socles 110, 210 s'avère impossible sans outil.

La partie arrière 312 du socle 310 de la barrette de connexion 300 présente une forme de plaque rectangulaire, qui s'étend entre les bords d'extrémité avant des pans 118, 218 des deux socles 110, 210 des deux modules 100, 200. Ces pans 118, 218 présentent donc, avec la partie arrière 312 du socle 310 de la barrette de connexion 300, une forme de pont adapté à enjamber la partie du panneau de plâtre de la cloison creuse 1 qui s'étend entre les deux ouvertures circulaires 2, 3.

La partie avant 311 du socle 310 de la barrette de connexion 300 s'étend quant à elle depuis l'une jusqu'à l'autre des parois frontales 116, 216 des socles des deux modules 100, 200, à la manière d'une passerelle de hauteur réduite. Cette partie avant 311 présente ainsi une paroi frontale plane, dont les extrémités sont recourbées pour se raccorder aux parois frontales 116, 216 des socles des deux modules 100, 200, et dont les côtés sont recourbés vers l'arrière.

Une fois les socles 110, 210 des deux modules 100, 200 assemblés, les parties avant 311 et arrière 312 du socle 310 de la barrette de connexion 300 sont ainsi prévues pour délimiter un logement pour les conducteurs électriques 320, 321, 322, qui est fermé sur les côtés et qui débouche dans les socles 110, 210 des deux modules 100, 200.

Dans le mode de réalisation représenté sur les figures, les modules 100, 200 présentent tous deux des fonctions de prises de courant.

Comme le montre la figure 1, leurs enjoliveurs 500 définissent alors chacun un puits de réception de fiches électriques.

Comme le montre la figure 3, les bornes électriques 120, 121, 122 du premier module 100 sont alors quasi-identiques à celles du second module 200. Il s'agit ainsi de bornes électriques de terre, de phase et de neutre.

La borne de terre forme une broche de terre 120, 220, conçue pour émerger à l'intérieur du puits de réception délimité par l'enjoliveur 500.

Les deux autres bornes électriques, de phase et de neutre, forment quant à elles des alvéoles 121, 122, 221, 222 adaptées à recevoir des broches d'une fiche électrique.

Les deux alvéoles 121, 122, 221, 222 et la broche de terre 120, 220 de chaque module sont situées au niveau d'ouvertures prévues dans le fond du renfoncement 117 et dans le fond du puits de réception délimité par l'enjoliveur 500.

Comme le montre la figure 3, les deux alvéoles 121, 122 et la broche de terre 120 du premier module 100 diffèrent seulement de celles du second module 200 en ce qu'elles portent à l'arrière des pattes 120A, 121A, 122A pour leur connexion au réseau électrique local (les bornes du second module 200 sont dépourvues de telles pattes).

Comme le montre la figure 2, ces pattes 120A, 121A, 122A sont prévues pour émerger à l'arrière de la paroi de fond 115 du socle 110 du premier module 100. Contrairement à la paroi de fond 215 du socle 210 du second module 200, la paroi de fond 115 du socle 110 du premier module 100 présente alors trois ouvertures pour le passage de ces pattes 120A, 121A, 122A.

On observe par ailleurs sur la figure 3 que le socle 110, 210 de chaque module 100, 200 loge, à l'arrière du renfoncement 117, 217, un support 140, 240 dans lequel est monté un obturateur (non représenté) adapté à ne laisser accès aux alvéoles 121, 122, 221, 222 qu'à la condition que deux broches soient simultanément engagées dans l'enjoliveur 500 (ce qui évite l'introduction dans les alvéoles d'un objet autre qu'une fiche électrique).

Pour assurer la connexion des deux alvéoles 221, 222 et de la broche de terre 220 du second module 200 aux deux alvéoles 121, 122 et à la broche de terre 120 du premier module 100, le socle 310 de la barrette de connexion 300 loge ici trois conducteurs électriques 320, 321, 322 distincts.

Chaque conducteur électrique 320, 321, 322 se présente ici sous la forme d'un fil électrique en cuivre non gainé.

Un premier de ces fils électriques 320 présente deux extrémités respectivement soudées (ou serties) aux broches de terre 120, 220 des deux modules 100, 200.

Un second de ces fils électriques 321 présente deux extrémités respectivement soudées (ou serties) aux alvéoles de phase 121, 221 des deux modules 100, 200.

Un troisième de ces fils électriques 322 présente deux extrémités respectivement soudées (ou serties) aux alvéoles de neutre 122, 222 des deux modules 100, 200.

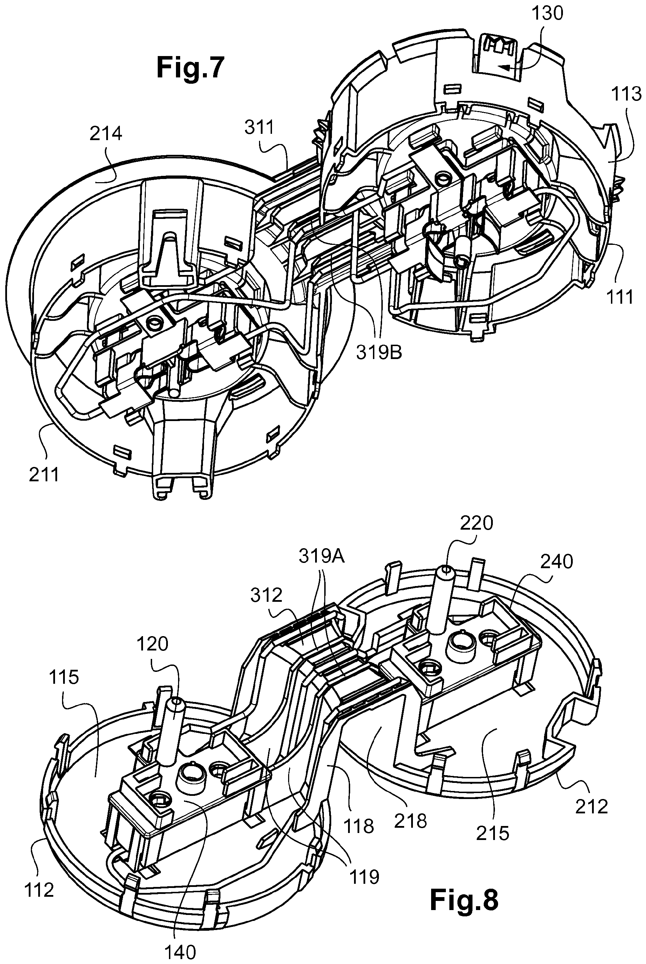

Comme le montrent les figures 3 et 8, la partie arrière 312 du socle 310 de la barrette de connexion 300 présente deux nervures (319A sur la figure 8) en saillie vers l'avant, qui s'étendent chacune de l'un à l'autre des deux pans 118, 218. Comme le montre la figure 7, la partie avant 311 du socle 310 de la barrette de connexion 300 présente également deux nervures 319B dont les tranches sont prévues pour s'appuyer contre les tranches des deux nervures 319A précitées pour délimiter trois conduits isolés électriquement pour le passage de ces trois fils électriques 320, 321, 322.

Les parois de fond 115, 215 des socles 110, 210 portent chacune deux cloisons avant 119, 219 qui prolongent ces nervures et qui permettent également d'isoler électriquement ces trois fils électriques 320, 321, 322.

Comme le montrent les figures 2 et 3, le second module 200, dont on rappelle qu'il est prévu pour être directement engagé au travers de l'ouverture circulaire 3 pratiquée dans la cloison creuse 1 (sans utiliser de boîte), présente une forme différente de celle du premier module 100.

Ainsi, la paroi de fond 215 de son socle 210 est fermée à l'arrière, alors que celle du premier module 100 est partiellement ouverte pour permettre le passage des pattes 120A, 121A, 122A.

Par ailleurs, les moyens de fixation 230 équipant le socle 210 du second module 200 sont différents de ceux équipant le socle 110 du premier module 100.

En l'espèce, ces moyens de fixation 230 comportent un épaulement 214 adapté à s'appuyer contre la face avant de la cloison creuse 1, autour de l'ouverture circulaire 3, et des moyens d'accrochage rétractables 231 adaptés à s'accrocher à la face arrière du panneau de plâtre de la cloison creuse 1.

Cet épaulement 214 est ici formé par un trottoir périphérique qui longe le bord de la paroi frontale 216 du socle 210 du second module 200. Ce trottoir périphérique présente plus précisément ici une forme annulaire autour de l'axe central A2, de diamètre extérieur supérieur à celui de l'ouverture circulaire 3 pratiquée dans la cloison creuse 1 (de manière qu'il peut s'appuyer solidement sur celle-ci).

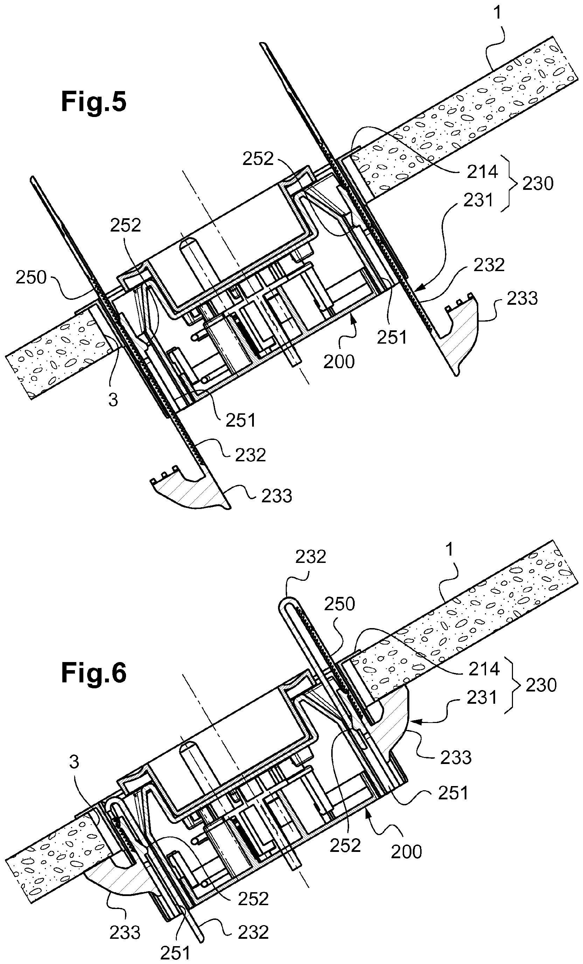

Comme le montrent les figures 2 et 5, les moyens d'accrochage rétractables 231 qui, en combinaison avec l'épaulement 214, sont prévus pour venir pincer le panneau de plâtre de la cloison creuse 1, comportent ici deux languettes souples 232 situées de manière diamétralement opposée sur chaque côté du socle 210.

Ces languettes souples 232 sont planes et allongées. Elles portent à leurs extrémités arrières des crochets 233 adaptés à venir s'appuyer contre la face arrière du panneau de plâtre de la cloison creuse 1.

Elles sont montées coulissantes au travers de premiers passages 250 délimités par le socle 210 du module 200.

Elles sont crantées sur une partie de leurs faces intérieures.

Leur souplesse permet tout d'abord aux crochets 233 de s'escamoter à l'arrière du socle 210, lorsque le module 200 est engagé au travers de l'ouverture circulaire 3 de la cloison creuse 1.

Leur souplesse leur permet par ailleurs, lorsqu'un installateur les tire vers l'avant (voir figure 6), de coulisser dans leurs premiers passages 250 jusqu'à ce que leurs crochets 233 s'appuient contre la face arrière du panneau de plâtre.

Enfin, leur souplesse permet de replier leurs extrémités avant vers l'intérieur et vers l'arrière, de manière à les enfiler dans des seconds passages 251 délimités par le socle 210 dans le voisinage des premiers passages 250.

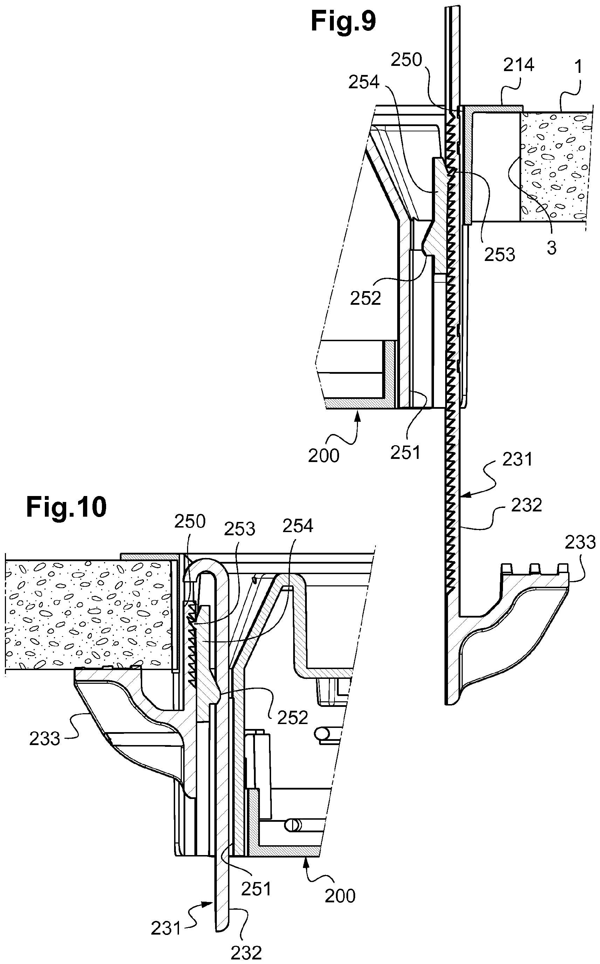

Comme le montrent bien les figures 5 et 9, ces seconds passages 251 sont isolés des premiers passages 250 par une simple cloison 254.

Cette simple cloison 254 porte, du côté du premier passage 250, une dent 253 en saillie, et, du côté du second passage 251, un renflement 252 en saillie.

De cette manière, comme le montrent bien les figures 6 et 10, lorsque les languettes souples 232 sont tirées vers l'avant puis repliées et engagées dans les seconds passages 251 :
- leurs crans viennent coopérer avec les dents 253, ce qui permet alors de bloquer les languettes souples 232 et de fixer rigidement le second module 200 dans la cloison creuse 1, et
- les languettes souples 232 se retrouvent bloquées dans les seconds passages 251 par les renflements 252, ce qui les empêche de ressortir de ces seconds passages 251.

Bien entendu, en variante, on aurait pu prévoir des moyens de fixation différents pour bloquer le socle 210 du second module 200 dans la cloison creuse 1. A titre d'exemple, on aurait pu utiliser des griffes qui interviendraient en position diamétralement opposée sur le socle et qui, sous le contrôle de vis, seraient aptes à basculer et/ou à coulisser par rapport au socle afin de venir s'accrocher à la cloison creuse.

Les moyens de fixation 130 du socle 110 du premier module 100 sont différents de ceux du second socle 210 du second module 200.

On rappelle qu'ils sont en effet prévus pour s'accrocher à la boîte électrique 10 (voir figure 1).

Préférentiellement, ces moyens de fixation 130 permettent de régler la position angulaire du socle 110 dans la boîte électrique 10. De cette manière, en pratiquant une ouverture 3 dans la cloison creuse 1 de diamètre supérieur à celui de la paroi latérale 213 du socle 210 du second module 200, il sera possible de régler l'horizontalité de l'ensemble formé des deux modules 100, 200 et de la barrette de connexion 300.

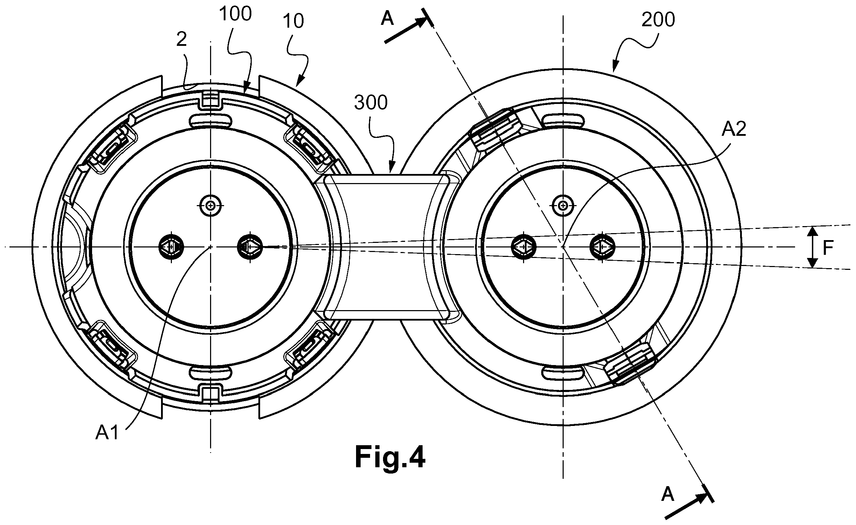

Pour cela, comme l'illustre la flèche F sur la figure 4, il faudra faire pivoter le premier module 100 dans sa boîte électrique 10 autour de l'axe central A1. Le débattement demeurera réduit (de l'ordre de 1 à 2 degrés), et dépendra de la différence de diamètres entre l'ouverture 3 et la paroi latérale 213 du socle 210 du second module 200.

Avant de décrire en détail les moyens de fixation 130 du premier module 100 à la boîte électrique 10, on pourra décrire brièvement la forme de la boîte électrique 10 représentée sur la figure 1.

Sur la figure 1, on observe que la boîte électrique 10 est constituée d'un corps 11 réalisé dans un matériau plastique rigide (typiquement en polypropylène) et d'un revêtement 12 réalisé dans un matériau plus souple (typiquement en SEBS - acronyme anglais de «polystyrène-b-poly(éthylène-butylène)-b-polystyrène »).

Le corps 11 comporte une paroi latérale 13 de forme cylindrique de révolution autour de l'axe central A1.

Pour sa fixation dans l'ouverture circulaire 2 pratiquée dans le panneau de plâtre, le corps 11 de la boîte électrique 10 comporte un trottoir extérieur 14 qui longe extérieurement le bord de l'extrémité avant de sa paroi latérale 13 et qui est adapté à prendre appui contre la face avant du panneau de plâtre, tout autour de l'ouverture circulaire qui y est pratiquée. Ainsi, ce trottoir extérieur 14 permet de bloquer la boîte électrique 10 vers l'arrière.

Pour son blocage vers l'avant, la boîte électrique pourrait être équipée de deux griffes qui interviendraient en position diamétralement opposée et qui, sous le contrôle de vis, seraient aptes à venir s'accrocher à la face arrière du panneau de plâtre.

Ici, comme le montre la figure 1, la paroi latérale 13 du corps 11 de la boîte électrique 10 comporte plutôt quatre volets 15 globalement rectangulaires qui sont découpés dans des ouvertures pratiquées dans la paroi latérale 13 et qui sont régulièrement répartis autour de l'axe central A1. Chaque volet 15 présente trois bords libres et un quatrième bord, à savoir ici le bord avant, qui se raccorde au reste de la paroi latérale 13 par deux pattes formant charnière. Les volets 15 sont ainsi libres de pivoter entre une position rentrée et une position sortie.

Le revêtement 12 souple recouvre la face extérieure de chacun de ces quatre volets 15.

Au repos, les volets 15 sont en position rentrée, c'est-à-dire que leurs faces externes sont situées dans le prolongement de la face externe du reste de la paroi latérale 13 du corps 11 de la boîte électrique 10. Ces volets ne gênent donc pas l'engagement de la boîte électrique 10 au travers de l'ouverture circulaire 2 pratiquée dans le panneau de plâtre.

Ces quatre volets 15 comportent chacun, en saillie sur leurs faces intérieures, deux nervures parallèles qui forment des rampes. Ainsi, lorsque le module 100 est rapporté dans la boîte électrique 10, son socle 110 appuie contre ces nervures parallèles, ce qui permet de forcer les volets 15 à se déployer en position sortie, c'est-à-dire en saillie de la face externe de la paroi latérale 13 du corps 11 de la boîte électrique 10. Dans cette position, les volets 15 s'accrochent alors à la face arrière du panneau de plâtre, ce qui bloque la boîte électrique 10 dans la cloison creuse 1.

Sur la figure 1, on observe que la boîte électrique 10 présente quatre fenêtres 17 identiques, régulièrement réparties autour de l'axe A1.

Ces fenêtres 17 présentent chacune une forme rectangulaire et elles s'étendent en longueur le long du bord avant de la paroi latérale 13 du corps 11 de la boîte électrique 10. Elles sont traversantes, en ce sens qu'elles débouchent de part et d'autre du corps 11 de la boîte électrique 10. Le revêtement 12 souple ferme toutefois les fonds de ces quatre fenêtres 17.

Les moyens de fixation 130 prévus sur le premier module 100 sont alors prévus pour se fixer à ces fenêtres 17.

En l'espèce, ces moyens de fixation 130 sont des moyens d'encliquetage.

Comme le montre la figure 3, ils comportent quatre pattes 131 globalement rectangulaires, régulièrement réparties autour de l'axe central A1. Ces quatre pattes 131 sont découpées dans la paroi latérale 113 du socle 110 du premier module 100. Elles présentent trois bords libres et un quatrième bord, à savoir ici le bord arrière, qui se raccorde au reste de la paroi latérale 113 du socle 110 pour former une charnière. Au repos, chaque patte 131 s'étend dans le prolongement de la paroi latérale 113.

Chaque patte 131 est alors flexible depuis sa position de repos vers une position déformée vers l'intérieur du socle 110.

Chaque patte 131 porte, du côté de son extrémité libre avant, des dents d'accrochage 132 adaptées à s'accrocher aux bords avant des fenêtres 17 de la boîte électrique 10.

Ces dents d'accrochage 132 s'étendent sur un secteur angulaire autour de l'axe central A1 qui est inférieur à celui des fenêtres 17 de la boîte électrique 10. De cette manière, il est possible d'ajuster la position angulaire du socle 110 par rapport à la boîte électrique 1.

Ces dents d'accrochage 132 présentent par ailleurs des pointes en saillie vers l'extérieur, qui peuvent s'accrocher au revêtement 12 flexible fermant le fond des fenêtres 17 de la boîte électrique 10. De cette manière, il est possible de bloquer la position angulaire du socle 110 par rapport à la boîte électrique 1.

Comme le montre la figure 2, le socle 110 du premier module 100 comporte également un trottoir périphérique 114 qui longe extérieurement sa paroi frontale et qui est adapté à venir s'appuyer contre le bord avant de la boîte électrique 10 lorsque les dents d'accrochage 132 s'accrochent aux fenêtres 17 de la boîte électrique 10.

Sur la figure 1, on a représenté également un étrier 20 qui est prévu pour être placé à l'arrière de la boîte électrique 10 en vue de faciliter la connexion de fils électriques issus du réseau électrique local au module 100.

Cet étrier 20, qui ne fait pas en propre l'objet de la présente invention, ne sera pas ici décrit en détail. On indiquera seulement qu'il comporte une embase circulaire 21 à partir duquel s'élèvent deux bras 22 dont les extrémités libres sont recourbées pour s'accrocher à la face avant du panneau de plâtre. Les deux bras 22 permettent de positionner l'étrier 20 sur le panneau de plâtre, avant d'y rapporter la boîte électrique 10.

L'embase circulaire 21 loge des éléments de connexion (non visibles sur les figures), qui comprennent chacun une borne d'entrée pour la connexion de l'un des fils électriques du réseau électrique local et une borne de sortie dans laquelle peut venir se brancher l'une des pattes 120A, 121A, 122A faisant saillie à l'arrière du socle 110 du premier module 100. Pour cela, le fond de la boîte électrique 10 présente une ouverture de passage de ces pattes 120A, 121A, 122A.

Cet étrier 20 comporte par ailleurs une ouverture d'entrée dans laquelle est fixé un embout 30 adapté à être connecté à trois gaines de cheminement de fils électriques (de type ICTA). C'est donc par cette ouverture d'entrée que les fils électriques peuvent entrer dans l'étrier 20 pour se brancher aux bornes d'entrée.

Enfin, sur la figure 1, on a représenté une plaque d'habillage 400 adaptée à recouvrir simultanément une partie des deux modules 100, 200 (autour des enjoliveurs 500) et la barrette de connexion 300, à des fins esthétiques et de protection électrique.

Cette plaque d'habillage 400 présente ici une forme oblongue et est percée de deux ouvertures 450 identiques dont les bords sont prévus pour venir s'appliquer contre les bords des deux enjoliveurs 500. Ces deux ouvertures 450 sont séparées l'une de l'autre par une partie 430 qui vient recouvrir la barrette de connexion 300.

La plaque d'habillage 400 comporte des moyens d'encliquetage (non visibles sur les figures) adaptés à s'accrocher à chacun des deux modules 100, 200. Il s'agit ici de dents d'encliquetage adaptées à venir s'accrocher aux parois frontales 116, 216.

En référence aux figures 1 et 4 à 6, on peut exposer en détail la mise en place de l'ensemble d'appareillages dans la cloison creuse 1 et sa connexion au réseau électrique local.

Initialement, les deux ouvertures circulaires 2, 3 sont découpées à la scie cloche dans le panneau de plâtre de la cloison creuse 1, l'une à côté de l'autre ou l'une au-dessus de l'autre (voir figure 1).

L'extrémité libre d'une gaine de cheminement est alors tirée au travers de l'une des ouvertures circulaires 2. Les extrémités des fils électriques sortant de cette gaine de cheminement sont alors engagées au travers de l'embout 30 et au travers de l'ouverture d'entrée prévue dans l'étrier 20, pour être connectées aux bornes d'entrée des éléments de connexion logés dans l'étrier 20. L'extrémité de la gaine de cheminement est ensuite bloquée dans l'embout 30.

L'étrier 20 est ensuite mis en place au travers de l'ouverture circulaire 2 pratiquée dans le panneau de plâtre. La boîte électrique 10 est à son tour mise en place au travers de l'ouverture circulaire 2, de manière à être parée à accueillir le module 100.

Comme le montre la figure 4, l'ensemble formé des deux modules 100, 200 et de la barrette de connexion 300 est alors rapporté sur la cloison creuse 1 de telle manière que le premier module 100 s'engage dans la boîte électrique 10 et que le second module 200 s'engage au travers de l'ouverture circulaire 3, dans une position telle que l'épaulement 214 du socle 210 du second module 200 s'appuie contre la cloison creuse 1.

On remarque ici que dans cette position le socle 310 de la barrette de connexion 300 s'étend entièrement à l'avant du plan de la face avant de la cloison creuse 1. C'est la raison pour laquelle il ne gêne pas l'engagement des deux modules 100, 200 dans la cloison creuse 1. Ici, la face arrière du socle 310 de la barrette de connexion 300 est prévue pour venir s'appliquer contre le panneau de plâtre de la cloison creuse 1.

Lors de l'engagement du premier module 100 dans la boîte électrique 10, son socle 110 repousse les volets 15 de la boîte électrique 10 vers l'extérieur (ce qui fixe la boîte électrique 10 à la cloison creuse 1), et ses moyens de fixation 130 se clipsent dans les fenêtres 17 de la boîte électrique 10 (ce qui fixe le premier module 100 dans la boîte électrique 10).

Une fois l'ensemble mis en place, les languettes flexibles 232 du second module 200 sont tirées vers l'avant de manière qu'elles coulissent dans les premiers passages 250 du socle 210, jusqu'à ce que leurs crochets 233 viennent s'appuyer contre la face arrière du panneau de plâtre.

Les languettes flexibles 232 sont ensuite repliées et enfilées dans les seconds passages 251 du socle 210 pour être bloquées en position (voir figure 6).

Enfin, la plaque d'habillage 400 est encliquetée sur les deux modules 100, 200.

On pourra notamment prévoir que l'ensemble comporte un plus grand nombre de modules juxtaposés, connectés deux à deux par des barrettes de connexion (préférentiellement, l'un seulement de ces modules étant prévu pour s'engager dans une boîte électrique).

On pourra également prévoir que les modules puissent être rapportés en position superposée l'un au-dessus de l'autre, selon une ligne verticale (et non l'un à côté de l'autre, selon une ligne horizontale, comme cela apparaît sur la figure 4).

On pourrait par ailleurs prévoir que les modules aient des fonctions différentes de celle représentée sur les figures, par exemple des fonctions d'interrupteurs commandés par radio, de prises USB, ...

## Revendications

1. Ensemble d'appareillages électriques à rapporter dans une paroi (1), comportant :
- deux modules (100, 200) distincts qui comprennent chacun un socle (110, 210) logeant des bornes électriques (120, 121, 122, 220, 221, 222), l'un des socles (110) étant équipé de moyens de fixation (130) dans une boîte électrique (10), l'autre des socles (210) étant équipé de moyens de fixation (230) dans une cavité (3) pratiquée dans la paroi (1), et
- une barrette de connexion (300) qui comprend un socle (310) logeant des conducteurs électriques (320, 321, 322) adaptés à connecter les bornes électriques (120, 121, 122) de l'un des modules (100) avec les bornes électriques (220, 221, 222) de l'autre module (200),
**caractérisé en ce qu'**une partie au moins du socle (310) de la barrette de connexion (300) vient de formation avec une partie au moins du socle (110, 210) de l'un et/ou de l'autre des deux modules (100, 200).

2. Ensemble selon la revendication précédente, dans lequel le socle (310) de la barrette de connexion (300) vient entièrement de formation avec une partie du socle (110, 210) de l'un et/ou l'autre des deux modules (100, 200).

3. Ensemble selon l'une des revendications précédentes, dans lequel le socle (110, 210) de chaque module (100, 200) comporte une partie avant (111, 211) et une partie arrière (112, 212) à assembler l'une avec l'autre, et dans lequel le socle (310) de la barrette de connexion (300) comporte une partie avant (311) et une partie arrière (312) qui viennent respectivement de formation avec les parties avant (111, 211) des socles des deux modules (100, 200) et avec les parties arrière (112, 212) des socles des deux modules (100, 200).

4. Ensemble selon l'une des revendications précédentes, dans lequel le socle (110, 210) de chaque module (100, 200) comporte une partie avant (111, 211) et une partie arrière (112, 212) équipées de moyens d'encliquetage complémentaires.

5. Ensemble selon l'une des revendications précédentes, dans lequel les conducteurs électriques (320, 321, 322) sont chacun formés d'une seule pièce et présentent chacun une extrémité soudée ou sertie sur les bornes électriques (120, 121, 122, 220, 221, 222) correspondantes de l'un des deux modules (100, 200).

6. Ensemble selon la revendication précédente, dans lequel les conducteurs électriques (320, 321, 322) présentent chacun deux extrémités respectivement soudées ou serties sur les bornes électriques (120, 121, 122, 220, 221, 222) correspondantes de l'un et de l'autre des deux modules (100, 200).

7. Ensemble selon l'une des revendications précédentes, dans lequel le socle (210) d'un second des modules (200) comporte une paroi latérale (213) et un épaulement (214) qui fait saillie à l'extérieur de la paroi latérale (213) et qui présente une face arrière plane pour s'appuyer contre la face avant de la paroi (1).

8. Ensemble selon la revendication précédente, dans lequel le socle (310) de la barrette de connexion (300) s'étend entièrement à l'avant du plan de la face arrière plane de l'épaulement (214) du socle (210) du second module (200).

9. Ensemble selon l'une des deux revendications précédentes, dans lequel les moyens de fixation (230) du socle (210) du second module (200) comportent des moyens d'accrochage rétractables mobiles entre une position rétractée vers l'intérieur par rapport à la paroi latérale (213) du socle (210) et une position déployée vers l'extérieur par rapport à la paroi latérale (213) du socle (210).

10. Ensemble selon l'une des revendications précédentes, dans lequel les moyens de fixation (130) du socle (110) d'un premier des modules (100) comportent des moyens de réglage de la position angulaire du premier socle (110) dans la boîte électrique (10).

11. Ensemble selon l'une des revendications précédentes, dans lequel il est prévu une plaque d'habillage (400) adaptée à recouvrir simultanément une partie frontale des socles (110, 210) des deux modules (100, 200) et le socle (310) de la barrette de connexion (300).

12. Ensemble selon la revendication précédente, dans lequel la plaque d'habillage (400) comporte des moyens d'encliquetage (450) adaptés à s'accrocher aux socles (110, 210) de chacun des deux modules (100, 200).

13. Ensemble selon l'une des revendications précédentes, dans lequel le socle (310) de la barrette de connexion (300) comprend intérieurement au moins une nervure de rigidification et d'isolement électrique, qui s'étend en longueur depuis l'un jusqu'à l'autre des socles (110, 210) des deux modules (100, 200).

14. Ensemble selon l'une des revendications précédentes, dans lequel l'un au moins des deux modules (100, 200) présente une fonction de prise de courant.

## Patentansprüche

1. Verbund von in eine Wand (1) einzubringenden elektrischen Geräten mit
- zwei getrennten Modulen (100, 200), von denen jedes einen Sockel (110, 210) aufweist, der elektrische Kontakte (120, 121, 122, 220, 221, 222) trägt, wobei einer (110) der Sockel mit Mitteln (130) zum Befestigen in einer elektrischen Dose (10) versehen ist, wobei der andere (210) der Sockel mit Mitteln (230) zum Befestigen in einer in der Wand (1) gebildeten Aushöhlung (3) versehen ist, und
- einer Klemmenleiste (300), die einen Sockel (310) aufweist, der elektrische Leiter (320, 321, 322) trägt, die dazu ausgelegt sind, die elektrischen Kontakte (120, 121, 122) des einen (100) der Module mit den elektrischen Kontakten (220, 221, 222) des anderen Moduls (200) zu verbinden,
**dadurch gekennzeichnet, daß** wenigstens ein Teil des Sockels (310) der Klemmenleiste (300) mit wenigstens einem Teil des Sockels (110, 210) des einen und/oder des anderen der beiden Module (100, 200) einstückig gefertigt ist.

2. Verbund gemäß dem vorangehenden Anspruch, bei dem der Sockel (310) der Klemmenleiste (300) vollständig mit einem Teil des Sockels (110, 210) des einen und/oder des anderen der beiden Module (100, 200) einstückig gefertigt ist.

3. Verbund gemäß einem der vorangehenden Ansprüche, bei dem der Sockel (110, 210) jedes Moduls (100, 200) einen vorderen Teil (111, 211) und einen hinteren Teil (112, 212) aufweist, die jeweilig miteinander zusammenzubauen sind, und bei dem der Sockel (310) der Klemmenleiste (300) einen vorderen Teil (311) und einen hinteren Teil (312) aufweist, die jeweils mit den vorderen Teilen (111, 211) der Sockel der beiden Module (100, 200) und mit den hinteren Teilen (112, 212) der Sockel der beiden Module (100, 200) einstückig gefertigt sind.

4. Verbund gemäß einem der vorangehenden Ansprüche, bei dem der Sockel (110, 210) jedes Moduls (100, 200) einen vorderen Teil (111, 211) und einen hinteren Teil (112, 212) aufweist, die mit zusätzlichen Einrastmitteln ausgestattet sind.

5. Verbund gemäß einem der vorangehenden Ansprüche, bei dem die elektrischen Leiter (320, 321, 322) jeweils aus einem Stück gebildet sind und jeweils ein auf die entsprechenden elektrischen Kontakte (120, 121, 122, 220, 221, 222) eines der beiden Module (100, 200) gelötetes oder gecrimptes Ende aufweisen.

6. Verbund gemäß dem vorangehenden Anspruch, bei dem die elektrischen Leiter (320, 321, 322) jeweils zwei auf die entsprechenden elektrischen Kontakte (120, 121, 122, 220, 221, 222) des einen und des anderen der beiden Module (100, 200) gelötete oder gecrimpte Enden aufweisen.

7. Verbund gemäß einem der vorangehenden Ansprüche, bei dem der Sockel (210) eines zweiten (200) der Module eine Seitenwand (213) und einen Vorsprung (214), der aus der Seitenwand (213) nach außen hervorsteht und der eine ebene Rückseite aufweist, um sich auf der Vorderseite der Wand (1) abzustützen.

8. Verbund gemäß dem vorangehenden Anspruch, bei dem sich der Sockel (310) der Klemmenleiste (300) vollständig vor der Ebene der ebenen Rückseite des Vorsprungs (214) des Sockels 210 des zweiten Moduls (200) erstreckt.

9. Verbund gemäß einem der beiden vorangehenden Ansprüche, bei dem die Befestigungsmittel (230) des Sockels (210) des zweiten Moduls (200) einziehbare Einhakmittel aufweist, die zwischen einer gegenüber der Seitenwand (213) des Sockels (210) nach innen zurückgezogenen Position und einer gegenüber der Seitenwand (213) des Sockels (210) nach außen vorgelagerten Position bewegbar sind.

10. Verbund gemäß einem der vorangehenden Ansprüche, bei dem die Befestigungsmittel (130) des Sockels (110) eines ersten (100) der Module Mittel zum Einstellen der Winkelposition des ersten Sockels (110) in der elektrischen Dose (10) aufweisen.

11. Verbund gemäß einem der vorangehenden Ansprüche, bei dem eine Abdeckplatte (400) vorgesehen ist, die dazu ausgelegt ist, eine Vorderseite der Sockel (110, 210) der beiden Module (100, 200) und den Sockel (310) der Klemmenleiste (300) gleichzeitig abzudecken.

12. Verbund gemäß dem vorangehenden Anspruch, bei dem die Abdeckplatte (400) Einrastmittel (450) aufweist, die dazu ausgelegt sind, sich am jeweiligen Sockel (110, 210) jedes der beiden Module (100, 200) festzuhaken.

13. Verbund gemäß einem der vorangehenden Ansprüche, bei dem der Sockel (310) der Klemmenleiste (300) innen wenigstens eine Rippe zur Versteifung und zur elektrischen Isolation aufweist, die sich längs von einem zum anderen der Sockel (110, 210) der beiden Module (100, 200) erstreckt.

14. Verbund gemäß einem der vorangehenden Ansprüche, bei dem wenigstens eins der beiden Module (100, 200) eine Funktion einer Stromsteckdose aufweist.

## Claims

1. A set of electrical accessories for fitting in a wall (1), the set comprising:
• two discrete modules (100, 200) each including a base (110, 210) that houses electrical terminals (120, 121, 122, 220, 221, 222), one of the bases (110) being fitted with fastener means (130) for fastening in an electrical box (10), the other of the bases (210) being fitted with fastener means (230) for fastening in a cavity (3) formed in the wall (1); and
• a connection bar (300) including a base (310) that houses electrical conductors (320, 321, 322) that are adapted to connect the electrical terminals (120, 121, 122) of one of the modules (100) with the electrical terminals (220, 221, 222) of the other module (200);
the set being **characterized in that** at least a portion of the base (310) of the connection bar (300) is formed integrally with at least a portion of the base (110, 210) of one and/or of the other of the two modules (100, 200).

2. A set according to the preceding claim, wherein the entire base (310) of the connection bar (300) is formed integrally with a portion of the base (110, 210) of one and/or of the other of the two modules (100, 200).

3. A set according to any preceding claim, wherein the base (110, 210) of each module (100, 200) comprises a front portion (111, 211) and a rear portion (112, 212) for assembling together, and wherein the base (310) of the connection bar (300) comprises a front portion (311) that is formed integrally with the front portions (111, 211) of the bases of the two modules (100, 200), and a rear portion (312) that is formed integrally with the rear portions (112, 212) of the bases of the two modules (100, 200).

4. A set according to any preceding claim, wherein the base (110, 210) of each module (100, 200) comprises a front portion (111, 211) and a rear portion (112, 212) that are fitted with complementary snap-fastener means.

5. A set according to any preceding claim, wherein each of the electrical conductors (320, 321, 322) is formed as a single piece and each presents an end that is soldered or crimped to a corresponding one of the electrical terminals (120, 121, 122, 220, 221, 222) of one of the two modules (100, 200).

6. A set according to the preceding claim, wherein each of the electrical conductors (320, 321, 322) presents two ends that are soldered or crimped to respective ones of the corresponding electrical terminals (120, 121, 122, 220, 221, 222) of each of the two modules (100, 200).

7. A set according to any preceding claim, wherein the base (210) of a second one of the modules (200) comprises a side wall (213) and a shoulder (214) that projects out from the side wall (213) and that presents a plane rear face for bearing against the front face of the wall (1).

8. A set according to the preceding claim, wherein the base (310) of the connection bar (300) extends entirely in front of the plane of the plane rear face of the shoulder (214) of the base (210) of the second module (200) .

9. A set according to either one of the two preceding claims, wherein the fastener means (230) of the base (210) of the second module (200) comprise retractable catch means that are movable between a position in which they are retracted inwards relative to the side wall (213) of the base (210), and a position in which they are deployed outwards relative to the side wall (213) of the base (210).

10. A set according to any preceding claim, wherein the fastener means (130) of the base (110) of a first one of the modules (100) comprise adjustment means for adjusting the angular position of the first base (110) in the electrical box (10).

11. A set according to any preceding claim, wherein a trim plate (400) is provided for simultaneously covering both front portions of the bases (110, 210) of the two modules (100, 200), and also the base (310) of the connection bar (300).

12. A set according to the preceding claim, wherein the trim plate (400) includes snap-fastener means (450) that are adapted to catch onto the bases (110, 210) of each of the two modules (100, 200).

13. A set according to any preceding claim, wherein the base (310) of the connection bar (300) comprises at least one electrically-insulating and stiffener rib that extends lengthwise from one of the bases (110, 210) of the two modules (100, 200) to the other base.

14. A set according to any preceding claim, wherein at least one of the two modules (100, 200) presents a power-outlet function.
